Europäisches Patentamt

European Patent Office

Office européen des brevets

(11) Numéro de publication: **0 490 009 A1**

## DEMANDE DE BREVET EUROPEEN

(21) Numéro de dépôt: **90440119.7**

(22) Date de dépôt: **13.12.90**

(51) Int. Cl.5: **H02J 9/06, E05F 15/14**

(43) Date de publication de la demande:
**17.06.92 Bulletin 92/25**

(84) Etats contractants désignés:
**AT BE CH DE DK ES GB GR IT LI LU NL SE**

(71) Demandeur: **Silvestrini, Franck**
**220 route des Blaquières**
**F-06570 Saint Paul(FR)**

(72) Inventeur: **Silvestrini, Franck**
**220 route des Blaquières**
**F-06570 Saint Paul(FR)**

(74) Mandataire: **Arbousse-Bastide, Jean-Claude**
**Philippe**
**CABINET ARBOUSSE BASTIDE 20, rue de**
**Copenhague**
**F-67000 Strasbourg(FR)**

(54) **Dispositif pour déclencher l'ouverture automatique d'un système de fermeture actionné par au moins un moteur électrique.**

(57) Dispositif pour déclencher l'ouverture automatique d'un système de fermeture actionné par au moins un moteur électrique, en cas de coupure accidentelle du courant d'alimentation dudit moteur électrique.

Ce dispositif comporte en combinaison :

a) une carte électronique dite "carte automate" (1) ayant pour fonction de détecter la coupure de courant et d'alimenter une carte de commande (2) ;

b) une carte électronique dite "carte de commande" (2) reliée à la carte automate (1) et ayant pour fonction de fournir un courant de fréquence déterminée dont elle contrôle et régule la modulation de largeur à une carte de puissance (3);

c) une carte électronique dite "carte de puissance" (3), reliée à la carte de commande (2), et qui déclenche la mise en marche du moteur électrique (10), provoquant l'ouverture du système de fermeture (13).

Fig 1

EP 0 490 009 A1

La présente invention a pour objet un dispositif permettant de déclencher l'ouverture automatique d'un système de fermeture actionné par au moins un moteur électrique, en cas de coupure accidentelle du courant d'alimentation dudit système de fermeture.

L'actionnement de certains systèmes de fermeture, notamment de portes de garages, est fréquemment effectué par un moteur électrique connecté, à travers une armoire de commande, à un dispositif de déclenchement qui peut être une carte magnétique ou une télécommande dont la manoeuvre provoque la mise en marche du moteur, entraînant l'ouverture de la porte et sa fermeture automatique après un certain laps de temps, l'ensemble de ces opérations étant préprogrammé électroniquement.

Si les dispositifs existants donnent entièrement satisfaction dans leur fonctionnement propre, ils présentent toutefois l'inconvénient d'être totalement dépendants du réseau d'alimentation électrique. Il subsiste ainsi un problème qui n'a pas trouvé à ce jour de solution, à savoir celui posé par la coupure accidentelle du courant d'alimentation du moteur : dans ce cas, en effet, la porte demeure Fermée et nécessite pour son ouverture une manoeuvre manuelle dont le processus échappe à la plupart des utilisateurs, avec à la clé le risque d'une fermeture plus ou moins prolongée du local.

La présente invention a pour but de remédier à cet inconvénient des systèmes connus en proposant un dispositif qui permette, en cas de coupure accidentelle du courant d'alimentation du moteur électrique qui en assure le fonctionnement, le déclenchement automatique de l'ouverture du système de fermeture qu'il commande.

La présente invention a ainsi pour objet un dispositif déclenchant l'ouverture automatique, en cas de coupure accidentelle du courant d'alimentation, d'un système de fermeture actionné par un moteur électrique, ce dispositif se caractérisant essentiellement en ce qu'il comporte une carte électronique dite "carte automate" qui est relié à une batterie et qui détecte la coupure de courant, envoyant aussitôt l'alimentation de mise en marche à une seconde carte électronique dite "carte de commande", laquelle a pour fonction de fournir un courant de fréquence déterminée avec modulation de largeur variable à une "carte de puissance" qui lui est reliée et qui est reliée par ailleurs, à travers un contacteur, à la batterie dont elle transforme le courant continu en courant alternatif de même valeur nominale, ce dernier étant transformé en un courant de même tension que le courant d'alimentation du dispositif grâce à un transformateur élévateur de tension qui alimente le moteur électrique actionnant le système de fermeture automatique, déclenchant l'ouverture de ce dernier.

Le dispositif selon l'invention comprend en outre un transformateur abaisseur de tension alimenté normalement par le courant d'alimentation du secteur et alimentant à la fois la carte automate, un contacteur d'isolement et un chargeur à seuil relié à la batterie. De la sorte, la batterie est rechargée dès le rétablissement du courant d'alimentation, au bout d'un laps de temps fonction de l'intensité de charge réglée, ce qui lui permet d'alimenter en relais la carte de puissance à travers le contacteur d'isolement lors d'une coupure de courant

La carte de puissance, commandée par la carte automate à travers la carte de commande dont la carte automate temporise le fonctionnement, peut ainsi déclencher l'ouverture du système de fermeture lors d'une coupure du courant d'alimentation.

Le contacteur d'isolement placé entre la batterie et la carte de puissance a pour fonction de n'autoriser l'alimentation de cette dernière par la batterie que lorsque le courant d'alimentation est coupé.

La carte automate du dispositif selon l'invention permet en outre, lorsque le courant d'alimentation est rétabli, de fournir une impulsion à l'armoire de commande du moteur de manière à déclencher la fermeture du système, qui revient à sa position normale de fonctionnement.

Afin de réaliser l'ensemble d'opérations prévues, les différentes cartes électroniques du dispositif selon l'invention comprennent les assemblages appropriés d'éléments électroniques.

Ainsi la carte automate, qui prend en compte les coupures du courant (exception faite des microcoupures du secteur), comporte au moins deux relais temporisés réglables, dont l'un entre en fonction dès la coupure du courant et l'autre dès son rétablissement.

Le premier de ces relais temporisés a pour fonction de déclencher la mise en marche de la carte de commande qui fournit à la carte de puissance un courant de fréquence déterminée, par exemple 50 Hz, dont elle contrôle et analyse la modulation de largeur.

Le second relai temporisé a pour fonction de fournir une impulsion à l'armoire de commande du système dès le rétablissement du courant d'alimentation, en vue de déclencher la fermeture du système, qui revient à son fonctionnement normal.

Dans certains cas de systèmes à deux vantaux nécessitant leur décalage pendant la manoeuvre d'ouverture, la carte automate peut comporter en outre un relais temporisé permettant de décaler les deux vantaux du système, de manière à éviter qu'ils se heurtent et se bloquent pendant l'opération d'ouverture.

Enfin, dans certains cas où le système comporte une électro-serrure préalablement débloquée par l'armoire de commande du système, la carte automate peut également comporter un relais temporisé qui envoie une impulsion à ladite électroserrure en vue de réaliser son déblocage..

La carte de commande du dispositif selon l'invention, commandée par la carte automate à travers un relais temporisé alimenté par la batterie, comprend un oscillateur réglable et un modulateur de largeur réglable manuellement et automatiquement, muni d'un réglage automatique pour supporter la pointe d'intensité au démarrage du ou des moteurs du système.

La carte de commande comprend en outre un réglage de coupure de ses fonctions provoquant leur interruption au cas où la charge de la batterie serait insuffisante, de manière à éviter sa détérioration.

La carte de puissance du dispositif selon l'invention peut comprendre des transistors du type "mos-fat" mis en parallèle de manière à délivrer de fortes puissances et commandés à travers des optocoupleurs de manière à assurer la fiabilité de la carte de puissance.

Le dispositif selon l'invention comprend en outre un chargeur posltionné entre le transformateur abaisseur de tension connecté au secteur et la batterie, ce chargeur pouvant être un chargeur à seuil comportant un niveau haut de charge commandant l'arrêt de la charge de la batterie, et un niveau bas de charge commandant la mise en route de la charge, ces deux niveaux étant réglables, de même que l'intensité de charge de la batterie.

Enfin le dispositif selon l'invention comprend un système de protection antiselfique qui peut être constitué de deux diodes pour la carte de puissance et d'un circuit connecté en parallèle sur la sortie du transformateur élévateur de tension, et constitué d'un condensateur monté en série avec une résistance.

D'autres caractéristiques et avantages du dispositif selon l'invention ressortent de la description qui suit et qui se réfère au dessin annexé, dans lequel :

- la figure 1 représente un schéma synoptique du dispositif selon l'invention connecté à un système de fermeture à un moteur.
- la figure 2 représente un schéma synoptique partiel d'un dispositif selon l'invention connecté à un système de fermeture à deux moteurs.

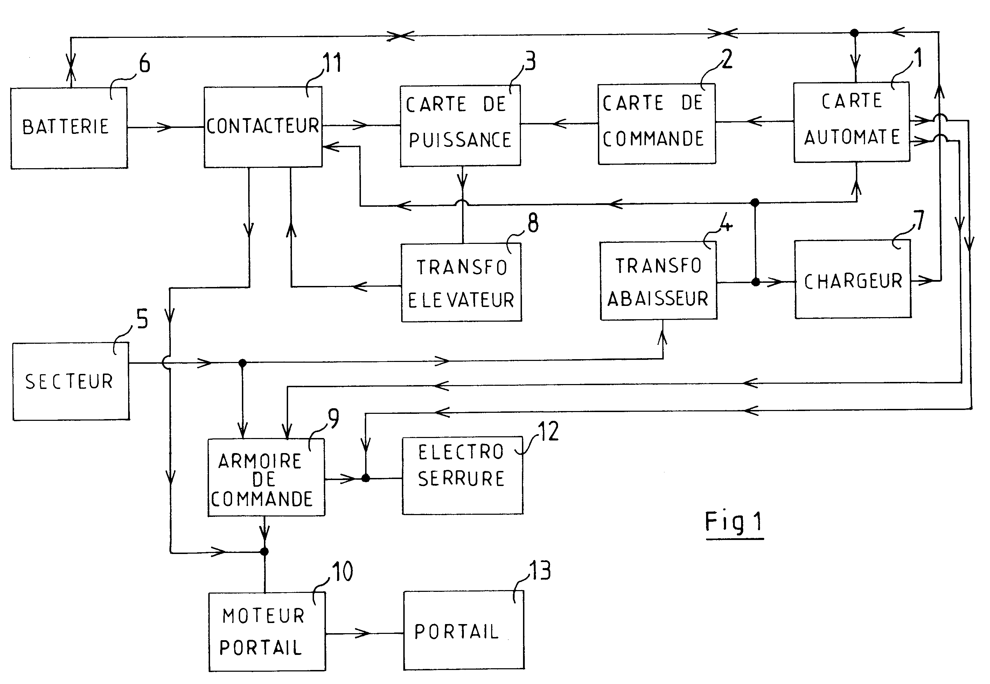

Si on se réfère d'abord à la figure 1, on voit que le dispositif selon l'invention comprend une carte automate 1 reliée à une carte de commande 2, à une batterie 6, à l'armoire de commande 9 et à un transformateur abaisseur de tension 4 qui reçoit le courant d'alimentation provenant du secteur 5. La carte de commande 2 est reliée à une carte de puissance 3 qui reçoit, à travers un contacteur d'isolement 11, un courant continu provenant d'une batterie 6 par ailleurs connectée à un chargeur à seuil 7 alimenté par le transformateur abaisseur de tension 4.

La batterie 6 peut ainsi alimenter d'une part la carte automate 1 et d'autre part, à travers la carte de puissance 3, le transformateur élévateur de tension 8 qui alimente alors, à travers le contacteur 11, le moteur 10 déclenchant le fonctionnement de ce dernier dans le sens de l'ouverture du système de fermeture, en l'occurrence le portail 13.

Le contacteur 11 coupe l'alimentation du transformateur élévateur de tension 8 lorsque le moteur se met en marche, de manière à éviter que ce dernier lui injecte en retour un courant qu'il réinjecterait à son tour dans la carte de puissance 3, au risque de l'endommager.

Une électro-serrure 12 est reliée à l'armoire de commande 9 et à la carte automate 1 qui en commande le déblocage dès le déclenchement du système d'ouverture.

Le fonctionnement de ce dispositif est le suivant : le moteur 10, normalement alimenté par le secteur 5 via l'armoire de commande 9, déclenche en temps normal l'ouverture du système de fermeture 13 lorsque l'on actionne l'armoire de commande 9. Le secteur 5 alimente en outre le transformateur abaisseur de tension 4 qui transforme le courant du secteur (basse tension) en un courant alternatif de très basse tension (par exemple 24V), lequel alimente la carte automate 1, ainsi que la batterie 6 à travers le chargeur à seuil 7, jusqu'à ce que son niveau haut de charge soit atteint.

En cas de coupure de courant, le transformateur 4 cesse d'alimenter la carte automate 1 et le contacteur 11, qui connecte aussitôt la batterie 6 à la carte de puissance 3 et le transformateur élévateur 8 au moteur 10. La carte automate 1, alimentée par la batterie 6, déclenche aussitôt la mise en marche de la carte de commande 2 qui fournit à la carte de puissance 3 un courant de fréquence déterminée dont elle contrôle et régule la modulation de largeur. La carte de puissance 3, alimentée par la batterie 6, à travers le contacteur 11, en un courant continu, transforme ce courant en un courant alternatif alimentant le transformateur élévateur de tension 8, qui déclenche à travers le contacteur 11 la mise en marche du moteur 10, provoquant l'ouverture du portail 13.

Lorsque le courant d'alimentation est rétabli, la carte automate 1 envoie une impulsion à l'armoire de commande 9 pour déclencher la fermeture du portail 13 qui revient à sa position normale de fonctionnement, le contacteur 11 déconnectant la batterie 6 de la carte de puissance 3 et le transformateur 8 du moteur 10.

Il convient de noter que le système de conversion du courant de très basse tension en courant de basse tension, constitué du transformateur 8, de la carte de puissance 3 et de la carte de commande 2, peut être remplacé par tout système possédant la même fonction, tel qu'un onduleur.

Par ailleurs, le contacteur 11 peut être remplacé par une carte électronique comportant des relais appropriés, ou par tout système apte à remplir la même fonction.

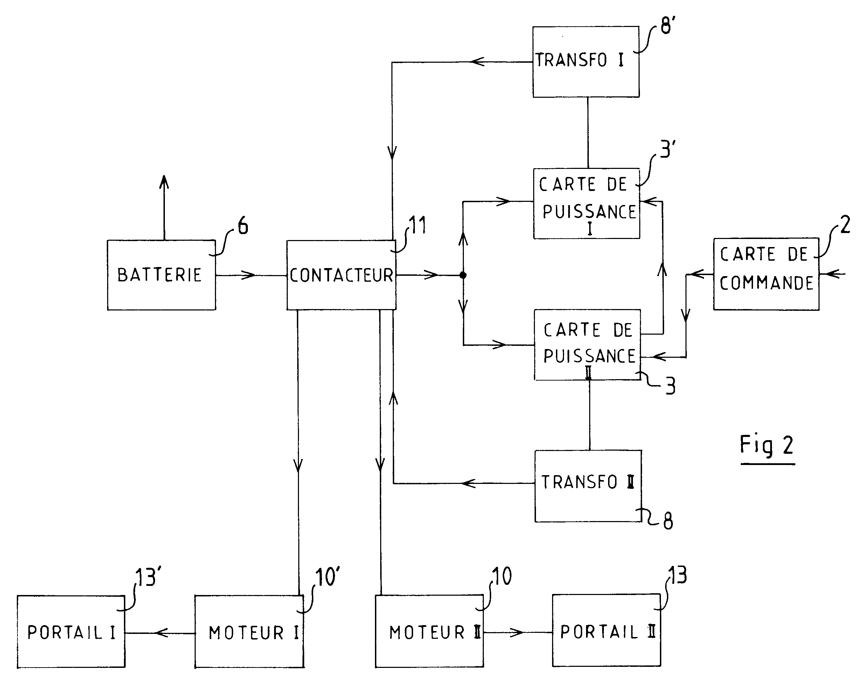

Si on se réfère maintenant à la figure 2, on voit sur cette figure l'ensemble formé par le contacteur 11, la carte de puissance 3, la carte de commande 2 et le transformateur élévateur de tension 8 modifié pour être adapté à un système à deux moteurs.

La batterie 6 est ainsi reliée à un contacteur 11 qui est relié d'une part à deux moteurs 10 et 10' destinés à actionner deux portails 13, 13' et d'autre part à deux transformateurs élévateurs de tension 8 et 8' et à deux cartes de puissance 3 et 3', dont l'une 3 est reliée à une carte de commande 2 et à l'autre carte de puissance 3', chaque carte de puissance 3, 3' étant par ailleurs reliée au transformateur correspondant 8, 8'.

Le reste du dispositif est le même que celui représenté en figure 1, et son fonctionnement est identique, à ceci près que lors d'une coupure de courant, la carte automate déclenche la mise en marche de la carte de commande 2 qui contrôle et régule le courant alternatif sortant de la carte de puissance 3, laquelle répercute la régulation sur la carte de puissance 3'. Les deux cartes de puissance 3 et 3' alimentent ainsi simultanément en courant alternatif les transformateurs élévateurs de tension 8 et 8', lesquels déclenchent à travers le contacteur 11 la mise en marche des moteurs 10 et 10' provoquant l'ouverture simultanée des portails 13 et 13'.

Bien entendu le dispositif selon l'invention ne saurait être limité à la description qui précède, les modes de réalisation décrits pouvant subir un certain nombre de modifications sans pour autant sortir du cadre de l'invention.

En particulier le dispositif selon l'invention, décrit dans son application à un système de fermeture automatique, peut être mis en oeuvre dans d'autres applications faisant intervenir des moteurs électriques, comme des éclairages de secours en sous-sol, des groupes frigorifiques, des groupes de ventilation et/ou d'aération, des pompes d'évacuation d'eau de sous-sols, etc...

**Revendications**

1. Dispositif pour déclencher l'ouverture automatique d'un système de fermeture actionné par au moins un moteur électrique, en cas de coupure accidentelle du courant d'alimentation dudit moteur électrique, caractérisé en ce qu'il comporte en combinaison:

   a) une carte électronique dite "carte automate" (1), connectée d'une part à une batterie (6) et d'autre part à un transformateur (4) abaisseur de tension alimenté par le courant d'alimentation de l'armoire de commande (9) du moteur électrique (10) et alimentant la batterie (6) à travers un chargeur (7), ladite carte automate ayant pour fonction de détecter la coupure de courant et d'alimenter une carte de commande (2) ;

   b) une carte électronique dite "carte de commande" (2) reliée à la carte automate (1) qui lui envoie l'alimentation de mise en marche dès la coupure de courant, ladite carte de commande (2) ayant pour fonction de fournir un courant de fréquence déterminée dont elle contrôle et régule la modulation de largeur à une carte de puissance (3) ;

   c) une carte électronique dite "carte de puissance" (3), reliée d'une part à la carte de commande (2) et d'autre part, à travers un contacteur (11), à une batterie (6) dont elle transforme le courant continu en un courant alternatif qu'elle envoie à un transformateur élévateur de tension (8), lequel déclenche à travers le contacteur (11) la mise en marche du moteur électrique (10), provoquant l'ouverture du système de fermeture (13).

2. Dispositif selon la revendication 1, caractérisé en ce que la carte automate (1) comporte au moins deux relais temporisés réglables, dont l'un entre en fonction dès la coupure du courant et l'autre dès son rétablissement.

3. Dispositif selon la revendication 1, caractérisé en ce que la carte de commande (2) comporte un oscillateur réglable et un modulateur de largeur également réglable.

4. Dispositif selon la revendication 1, caractérisé en ce que la carte de puissance (3) comporte des transistors du type "mos-fat" mis en parallèle et commandés à travers des optocoupleurs.

5. Dispositif selon la revendication 1, caractérisé en ce qu'il comprend en outre un système de protection antiselfique.

6. Dispositif selon la revendication 5, caractérisé en ce que ledit système de protection antiselfique est constitué de deux diodes pour la carte de puissance (3) et d'un circuit connecté en parallèle sur la sortie du transformateur élévateur de tension (8) et formé d'un condensateur monté en série avec une résistance.

Fig 1

Fig 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-2 327 664 (WESTLAND E.M.G)<br>* page 1, ligne 1 - ligne 11; revendication 1; figure 1 *<br>--- | 1 | H02J9/06<br>E05F15/14 |
| Y | WO-A-8 707 783 (PREFERRED ELECTRONICS INC.)<br>* page 8, ligne 8 - page 10, ligne 5; figures 1,2 *<br>--- | 1 | |
| A | INTERNATIONAL JOURNAL OF ELECTRONICS<br>vol. 62, no. 6, Juin 1987, LONDON GB<br>pages 949 - 952;<br>S.K. BISWAS: 'a fast acting detector for abnormal output voltages of an ups system '<br>* page 950, ligne 25 - ligne 31; figure 1 *<br>--- | 2 | |
| A | EP-A-200 656 (SOCIETE GENERALE DE TRAVAUX ELECTRIQUES)<br>* page 11, ligne 19 - ligne 30; figures 1,4 *<br>--- | 3,4 | |
| A | GB-A-2 050 725 (SHIPS ELECTRONIC SERVICES)<br>* abrégé; figure 1 *<br>--- | 4 | **DOMAINES TECHNIQUES RECHERCHES (Int. Cl.5 )** |
| A | WO-A-8 002 478 (EXIDE ELECTRONICS)<br>* page 7, ligne 4 - ligne 6; figure 4 *<br>----- | 5,6 | E05F<br>H02J |

Le présent rapport a été établi pour toutes les revendications

| Lieu de la recherche | Date d'achèvement de la recherche | Examinateur |
|---|---|---|
| LA HAYE | 10 JUILLET 1991 | GUILLAUME G.E.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)